# EUROPÄISCHE PATENTSCHRIFT

(11) **EP 3 954 905 B1**
(45) Veröffentlichungstag und Bekanntmachung des Hinweises auf die Patenterteilung: **28.08.2024**
(21) Anmeldenummer: 21188063.8
(22) Anmeldetag: 27.07.2021
(51) Int. Cl.: F16B 5/02

(54) **FEDERELEMENT**
SPRING ELEMENT
ÉLÉMENT RESSORT

(30) Priorität: 13.08.2020 DE 102020121339
(43) Veröffentlichungstag der Anmeldung: 16.02.2022
(73) Patentinhaber: Witte Automotive GmbH, 42551 Velbert (DE)
(72) Erfinder: Spickenheier, Klaus, 58640 Iserlohn (DE)
(74) Vertreter: Manitz Finsterwald Patent- und Rechtsanwaltspartnerschaft mbB

(56) Entgegenhaltungen:
- DE-A1- 102016 118 640
- DE-A1- 102018 113 895
- US-A- 3 861 776
- US-A- 5 474 479
- US-A- 5 667 413
- US-A- 6 042 432
- US-A1- 2005 047 893

## Beschreibung

Die Erfindung betrifft ein Federelement für eine Vorrichtung zum Ausgleichen von Toleranzen zwischen einem ersten Bauteil und einem zweiten Bauteil.

Derartige Vorrichtungen, welche auch als Toleranzausgleichsvorrichtungen bezeichnet werden, sind grundsätzlich bekannt und weisen beispielsweise ein Grundelement auf, welches an dem einen Bauteil anbringbar ist, und ein mit dem Grundelement in Gewindeeingriff stehendes Ausgleichselement, welches durch Herausdrehen aus dem Grundelement an dem anderen Bauteil zur Anlage bringbar ist. Zur Verbindung der beiden Bauteile dient ein Verbindungsmittel, wie beispielsweise eine Verbindungsschraube oder ein Gewindebolzen, welches durch einen sowohl in dem Grundelement als auch in dem Ausgleichselement vorgesehenen Durchgang durchsteckbar ist.

Das Herausdrehen des Ausgleichselements erfolgt durch Verdrehen des durchgesteckten Verbindungsmittels. Für die nötige Drehmomentübertragung ist ein Federelement in dem Durchgang des Ausgleichselements angeordnet, welches sich einerseits an dem Ausgleichselement abstützt und andererseits gegen das durch den Durchgang eingesteckte Verbindungsmittel drückt. Ein Federelement mit den Merkmalen des Oberbegriffs des Anspruchs 1 ist aus der DE 10 2016 118 640 A1 bekannt. Des Weiteren ist ein Federring im Zusammenhang mit einer Vorrichtung zum Ausgleichen von axialen Toleranzen zwischen zwei Bauteilen in der US 2005/0047893 A1 offenbart. Die DE 10 2018 113 895 A1 lehrt ein System zum Ausgleichen von radialen Toleranzen, bei dem eine Haltehülse einerseits mit einem Befestigungsbolzen und andererseits mit einer Begrenzungshülse reibschlüssig in Eingriff steht.

Damit das in dem Durchgang befindliche Federelement nicht versehentlich wieder aus dem Durchgang herausgezogen werden kann und schlimmstenfalls gänzlich verloren geht, ist das Federelement mit radial nach außen abstehenden Widerhaken versehen, mittels welchen sich das Federelement in dem Durchgang verkrallt, wodurch das Federelement in dem Durchgang sicher gehalten ist. Zu diesem Zweck sind die Widerhaken üblicherweise an gegenüberliegenden axialen Endseiten des Federelements ausgebildet.

Hierbei ergibt sich bei der Montage des Federelements jedoch das Problem, dass beim Einführen des Federelements in den Durchgang der Toleranzausgleichsvorrichtung die endseitig ausgebildeten Widerhaken schon zu Beginn des Einführvorgangs in den Durchgang mit dem Ausgleichselement in Kontakt gelangen, wodurch zur Montage des Federelements in dem Durchgang ein erhöhter Kraftaufwand erforderlich ist. Überdies ist nachteilig, dass in zur Montagerichtung entgegengesetzter Richtung sperrende Widerhaken durch ihre endständige Position an dem Federelement ihre Funktion nicht mehr erfüllen können, wenn das Federelement dennoch geringfügig aus dem Durchgang herausbewegt wurde, da sich die Widerhaken dann durch ihre endständige Position nicht mehr in dem Durchgang verkrallen können.

Eine Aufgabe der Erfindung ist es daher, ein Federelement zu schaffen, welches sich leichter montieren lässt und welches nach der Montage sicherer gehalten ist.

Die Aufgabe wird durch ein Federelement mit den Merkmalen des Anspruchs 1 gelöst. Das erfindungsgemäße Federelement umfasst mindestens zwei sich in Richtung einer Längsmittelachse des Federelements erstreckende und in Umfangsrichtung des Federelements zueinander beabstandete Axialstege, welche jeweils in Richtung der Längsmittelachse des Federelements gesehen zwei gegenüberliegende und durch einen Zwischenabschnitt verbundene Endabschnitte aufweisen. Dabei weisen die Endabschnitte eines Axialstegs zumindest annähernd den gleichen Radialabstand zur Längsmittelachse des Federelements auf und der zwischen diesen Endabschnitten angeordnete Zwischenabschnitt weist einen davon verschiedenen Radialabstand zur Längsmittelachse auf. Überdies verbindet mindestens ein Verbindungsring die Axialstege miteinander. Das erfindungsgemäße Federelement zeichnet sich durch mindestens einen Verkrallungsabschnitt aus, welcher nicht an axialen Endseiten des Federelements ausgebildet, sondern zu den Endabschnitten der Axialstege in axialer Richtung beabstandet ist und welcher sich in Bezug auf die Längsmittelachse schräg nach außen erstreckt.

Der Erfindung liegt der allgemeine Gedanke zugrunde, dass sich ein Federelement leichter in einen Durchgang eines Toleranzausgleichselements einführen lässt, indem mindestens ein Verkrallungsabschnitt im Gegensatz zu den Widerhaken bereits bekannter Federelemente nicht an axialen Endseiten des Federelements ausgebildet sind, sondern in axialer Richtung zu Endabschnitten des Federelements beabstandet ist. So lässt sich das Federelement in den Durchgang des Toleranzausgleichselements einführen, ohne dass der Verkrallungsabschnitt gleich mit einer Innenwand des Durchgangs in Eingriff gelangt. Hieraus ergibt sich der Vorteil, dass sich das Federelement mit geringerem Kraftaufwand in den Durchgang einführen lässt.

Durch die zu den Endabschnitten des Federelements in axialer Richtung beabstandete Lage des Verkrallungsabschnitts ergibt sich bei einem in dem Durchgang vollständig montierten Federelement außerdem der Vorteil, dass sich der Verkrallungsabschnitt beim Herausziehen des Federelements aus dem Durchgang in dem Durchgang über eine längere Wegstrecke verkrallt, wodurch das Herausziehen des Federelements erschwert ist und ein bereits montiertes Federelement bestenfalls nicht mehr verloren gehen kann.

Der sich in Bezug auf die Längsmittelachse schräg erstreckende Verkrallungsabschnitt weist sowohl eine Erstreckungskomponente in axialer Richtung als auch eine Erstreckungskomponente in radialer Richtung auf. Dabei ist die axiale Richtung durch die Längsmittelachse des Federelements definiert. Die radiale Richtung erstreckt sich rechtwinklig zur Längsmittelachse. In diesem Zusammenhang sei erwähnt, dass die Axialstege die Längsmittelachse umgeben.

Vorteilhafte Ausbildungen der Erfindung sind den Unteransprüchen, der Beschreibung und den Zeichnungen zu entnehmen.

Damit der Verkrallungsabschnitt sich wirksam in dem Durchgang der Toleranzausgleichsvorrichtung verkrallen kann, ist es von Vorteil, wenn der Verkrallungsabschnitt in radialer Richtung über die Endabschnitte hinausragt.

Für eine besonders elastische Ausbildung des Federelements in Umfangsrichtung liegt der Verbindungsring vorzugsweise in einer Ebene, welche quer, insbesondere rechtwinklig zu Längsmittelachse ausgerichtet ist.

Überdies ist es für eine besonders elastische Ausbildung von Vorteil, wenn das Federelement aus einem Federstahl gefertigt ist. Dabei kann das Federelement auf einfache Weise als Stanzbiegeteil ausgebildet sein. Es ist aber auch denkbar, das Federelement aus einem anderen starren und gleichzeitig auslenkbaren Material zu fertigen. Beispielsweise kann das Federelement auch aus einem Kunststoff gefertigt sein.

Gemäß einer vorteilhaften Ausgestaltung sind die Radialabstände der Endabschnitte eines Axialstegs größer als ein maximaler Radialabstand des zwischen diesen Endabschnitten angeordneten Zwischenabschnitts. Hierdurch erhält das Federelement eine taillierte Form, so dass sich lediglich die Endabschnitte des montierten Federelements an einer Durchgangsbegrenzungswand der Toleranzausgleichsvorrichtung abstützt. Auf der Innenseite des Federelements dient der taillierte Abschnitt zur Anlage an dem Verbindungsmittel, d.h. die Zwischenabschnitte der Axialstege nehmen das Verbindungsmittel zwischen sich auf.

Es ist aber auch denkbar, dass das Federelement bauchig ausgestaltet ist. In diesem Fall würden die jeweiligen Zwischenabschnitte der Axialstege einen größeren Radialabstand zur Längsmittelachse des Federelements aufweisen als die entsprechenden Endabschnitte.

Grundsätzlich ist auch eine reusen- oder trichterartige Ausgestaltung denkbar, bei welcher im Vergleich zu dem radialen Abstand des Zwischenabschnitts zur Längsmittelachse der eine Endabschnitt einen größeren Radialabstand zur Längsmittelachse und der entsprechend gegenüberliegende andere Endabschnitt einen geringeren Radialabstand zur Längsmittelachse des Federelements aufweist.

Gemäß einer besonders einfach herzustellenden Ausführungsform des Federelements geht mindestens ein Verkrallungsabschnitt aus dem Verbindungsring hervor. Hierbei kann der Verkrallungsabschnitt beispielsweise bereits bei dem Ausstanzen des Federelements mit ausgestanzt werden. Bevorzugt kann mindestens ein Verkrallungsabschnitt in Umfangsrichtung des Federelements gesehen zwischen zwei Axialstegen an dem Verbindungsring ausgebildet sein.

Zusätzlich oder alternativ kann mindestens ein Verkrallungsabschnitt aus einem der Axialstege hervorgehen. Dieser kann beispielsweise dadurch gefertigt sein, dass der Verkrallungsabschnitt aus dem Axialsteg teilweise ausgestanzt und mit seinem freien Ende von dem Axialsteg nach außen weggebogen wird.

Insbesondere kann der oder jeder Verkrallungsabschnitt in Richtung seines freien Endes spitz zulaufen. Hierdurch kann sich der Verkrallungsabschnitt besonders gut in dem Durchgang der Toleranzausgleichsvorrichtung verkrallen, da sich die Spitze besonders leicht in die Innenwand des Durchgangs eindrücken lässt.

Damit sich das Federelement in den Durchgang der Toleranzausgleichsvorrichtung leicht einführen lässt, kann ein freies Ende des oder jedes Verkrallungsabschnitts in Richtung einer senkrecht zur Längsmittelachse sowie mittig zwischen den Endabschnitten der Axialstegen ausgerichteten Mittenebene des Federelements weisen. Grundsätzlich ist es aber auch denkbar, dass mindestens ein Verkrallungsabschnitt mit seinem freien Ende in Richtung von der Mittenebene des Federelements wegweist. Es ist überdies auch möglich, dass mindestens ein Verkrallungsabschnitt mit seinem freien Ende in Richtung der Mittenebene des Federelements weist und mindestens ein weiterer Verkrallungsabschnitt mit seinem freien Ende in Richtung von der Mittenebene wegweist. Insbesondere können sämtliche Verkrallungsabschnitte entgegengesetzt zur Montagerichtung des Federelements ausgerichtet sein.

Gemäß einer vorteilhaften Ausführungsform des Federelements kann der Verbindungsring die Axialstege im Bereich ihrer einen Endabschnitte miteinander verbinden, während die gegenüberliegenden anderen Endabschnitte nicht durch einen Verbindungsring verbunden sind. Mit anderen Worten weist jeder Axialsteg einen freien Endabschnitt und einen gegenüberliegenden verbundenen Endabschnitt auf, wobei die verbundenen Endabschnitte durch den Verbindungsring verbunden sind.

Gemäß einer weiteren vorteilhaften Ausführungsform des Federelements kann der Verbindungsring die Axialstege im Bereich ihrer Zwischenabschnitte miteinander verbinden, so dass der Verbindungsring in axialer Richtung gesehen zwischen freien Endabschnitten der Axialstege ausgebildet ist. Bevorzugt ist hierbei jeweils mindestens ein Verkrallungsabschnitt auf gegenüberliegenden Seiten an dem Verbindungsring ausgebildet.

Gemäß einer besonders bevorzugten Ausführungsform des Federelements verbindet ein erster Verbindungsring die Axialstege im Bereich ihrer einen Endabschnitte und ein zweiter Verbindungsring verbindet die Axialstege im Bereich ihrer gegenüberliegenden anderen Endabschnitte. Somit sind sowohl die einen Endabschnitte als auch die gegenüberliegenden Endabschnitte jeweils durch einen Verbindungsring verbunden.

Bei all den vorbeschriebenen Ausführungsformen ist mindestens ein Verkrallungsabschnitt besonders bevorzugt an dem oder jedem Verbindungsring ausgebildet.

Vorzugsweise definiert die senkrecht zur Längsmittelachse ausgerichtete Mittenebene des Federelements eine erste Hälfte und eine zweite Hälfte des Federelements, wobei mindestens ein Verkrallungsabschnitt der ersten Hälfte mindestens einem Verkrallungsabschnitt der zweiten Hälfte zugewandt ist. Hierdurch lässt sich das Federelement mit seinem einen axialen Ende oder aber auch mit seinem anderen axialen Ende in den Durchgang der Toleranzausgleichsvorrichtung einführen. In diesem Zusammenhang ist es ferner von Vorteil, wenn das Federelement in Bezug auf seine Mittenebene spiegelsymmetrisch ausgebildet ist.

Damit das Federelement in Umfangsrichtung elastisch ausgebildet ist, kann der oder jeder Verbindungsring einen Schlitz aufweisen, wodurch sich das Federelement unter Verringerung des Spaltmaßes des Schlitzes in Umfangsrichtung federelastisch zusammendrücken lässt. Bevorzugt ist dabei der Schlitz axial ausgerichtet. Weist das Federelement mehrere Verbindungsringe auf, so können die Schlitze aller Verbindungsringe eine gemeinsame axiale Ausrichtung aufweisen.

Gegenstand der Erfindung ist außerdem eine Vorrichtung zum Ausgleichen von Toleranzen zwischen einem ersten Bauteil und einem zweiten Bauteil mit einem Grundelement, einem mit dem Grundelement in Eingriff stehenden Ausgleichselement, in welchem ein Durchgang für ein Verbindungsmittel ausgebildet ist, und einem Federelement der vorstehend beschriebenen Art, welches in dem Durchgang des Ausgleichselements angeordnet ist. Zur Anordnung des Federelements in dem Durchgang kann das Federelement in einer Montagerichtung in den Durchgang einbringbar sein. Bevorzugt sind die Montagerichtung und die Längsmittelachse parallel zueinander ausgerichtet.

Damit sich das Federelement beim Einführen in den Durchgang nicht bereits zu Beginn in dem Durchgang verkrallt, sondern leicht einführen lässt, können die Endabschnitte in Montagerichtung dem oder jedem Verkrallungsabschnitt vorgelagert sein. Hierdurch gelangen die Verkrallungsabschnitte des Federelements erst nach einer vorbestimmten Strecke mit dem Durchgang in Eingriff.

Nach der Montage des Federelements in dem Durchgang der Toleranzausgleichsvorrichtung ist es von Vorteil, wenn sich das Federelement nicht ohne weiteres aus dem Durchgang herausziehen lässt. Zu diesem Zweck kann mindestens ein Verkrallungsabschnitt gegen eine Verschiebung des Federelements in einer zur Montagerichtung entgegengesetzten Richtung sperren.

Nachfolgend wird die Erfindung rein beispielhaft anhand einer möglichen Ausführungsform unter Bezugnahme auf die beigefügten Zeichnungen beschrieben. Es zeigen:
- Fig. 1: eine perspektivische Ansicht eines Federelements; und
- Fig. 2: eine Schnittansicht einer Vorrichtung zum Ausgleichen von Toleranzen mit einem in einem Durchgang der Vorrichtung angeordneten Federelement von Fig. 1.

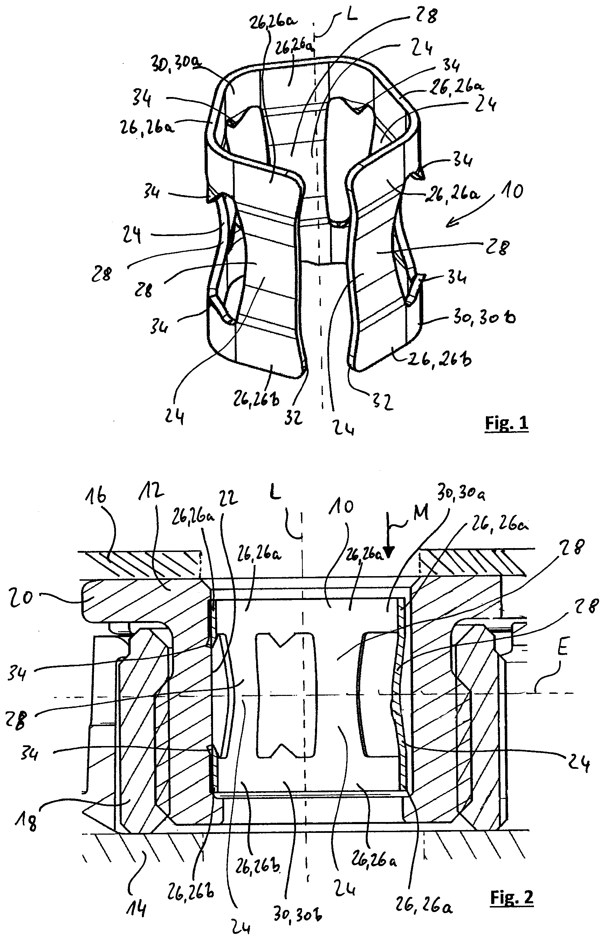

Die Figuren zeigen ein Federelement 10 für eine in Fig. 2 dargestellte Vorrichtung 12 zum Ausgleichen von Toleranzen zwischen einem ersten Bauteil 14 und einem zweiten Bauteil 16.

Die Vorrichtung 12 umfasst ein Grundelement 18, welches in Fig. 2 an dem ersten Bauteil 14 anbringbar oder angebracht ist. Das Grundelement 18 steht mit einem Ausgleichselement 20 in Gewindeeingriff, so dass das Ausgleichselement 20 durch Herausdrehen aus dem Grundelement 18 an dem zweiten Bauteil 16 zur Anlage bringbar ist.

Zur Verbindung der beiden Bauteile 14, 16 dient ein in den Figuren nicht dargestelltes Verbindungsmittel, welches beispielsweise in Form einer Verbindungsschraube oder eines Gewindebolzens ausgebildet sein kann. Das Verbindungsmittel ist dazu in dem Grundelement 18 als auch in dem Ausgleichselement 20 vorgesehenen Durchgang 22 durchsteckbar.

Durch Verdrehung des Verbindungsmittels lässt sich das Ausgleichselement 20 aus dem Grundelement 18 herausdrehen, bis das Ausgleichselement 20 an dem zweiten Bauteil 16 zur Anlage gelangt. Zur nötigen Drehmomentübertragung von dem Verbindungsmittel auf das Ausgleichselement 20 ist das Federelement 10 in dem Durchgang 22 des Ausgleichselements 20 angeordnet (Fig. 2). Dabei stützt sich das Federelement 10 einerseits an dem Ausgleichselement 20 reib- und/oder kraftschlüssig ab und andererseits drückt das Federelement 10 reib- und/oder kraftschlüssig gegen das durch den Durchgang eingesteckte Verbindungsmittel.

Nachdem das Ausgleichselement 20 an dem zweiten Bauteil 16 zur Anlage gelangt ist, wird ein Abstand zwischen dem ersten Bauteil 14 und dem zweiten Bauteil 16 durch die Vorrichtung 12 sowie das Verbindungsmittel sicher überbrückt. Es versteht sich, dass für das Verbindungsmittel eine in den Figuren ebenfalls nicht dargestellte Kontermutter vorgesehen sein kann.

Bezugnehmend auf Fig. 1 wird nun der Aufbau des Federelements 10 genauer erläutert.

Das in Fig. 1 dargestellte Federelement 10 umfasst konkret fünf sich in Richtung einer Längsmittelachse L des Federelements 10 erstreckende Axialstege 24. Dabei kann die Anzahl der Axialstege 24 auch von fünf abweichen. So ist auch denkbar, dass das Federelement 10 weniger als fünf Axialstege 24, beispielsweise drei oder vier Axialstege 24, oder mehr als fünf Axialstege 24, wie zum Beispiel sechs, sieben oder mehrere Axialstege 24, aufweisen kann. Das Federelement 10 weist jedoch mindestens zwei Axialstege 24 auf.

Jeder der Axialstege 24 weist jeweils zwei gegenüberliegende Endabschnitte 26 auf, welche in axialer Richtung durch einen zwischen den Endabschnitten 26 angeordneten Zwischenabschnitt 28 miteinander verbunden sind.

Wie anhand der Figuren ersichtlich ist, sind die Radialabstände der Endabschnitte 26 zur Längsmittelachse L des Federelements 10 größer als die maximalen Radialabstände der jeweiligen Zwischenabschnitte 28 zur Längsmittelachse L des Federelements 10. Dabei weisen sämtliche Endabschnitte 26 zumindest annähernd den gleichen Radialabstand zur Längsmittelachse L des Federelements 10 auf. Insgesamt erhält das Federelement 10 hierdurch eine taillierte Form.

Es ist aber auch denkbar, dass das Federelement 10 eine in den Ausführungsformen nicht dargestellte bauchige Form aufweist. Ist das Federelement 10 bauchig ausgestaltet, sind die Radialabstände der Endabschnitte 26 zur Längsmittelachse L entsprechend kleiner als die maximalen Radialabstände der jeweiligen Zwischenabschnitte 28 zur Längsmittelachse L des Federelements 10.

Wie ferner anhand der Figuren erkennbar ist, sind die Axialstege 24 sowohl an den einen Endabschnitten 26 als auch an den gegenüberliegenden anderen Endabschnitten 26 jeweils mittels eines quer zur Längsmittelachse L des Federelements 10 ausgerichteten Verbindungsrings 30 zueinander beabstandet miteinander verbunden. Konkret verbindet ein erster Verbindungsring 30a die Axialstege 24 im Bereich ihrer einen Endabschnitte 26a und ein zweiter Verbindungsring 30b verbindet die Axialstege 24 im Bereich ihrer gegenüberliegenden anderen Endabschnitte 26b.

In diesem Zusammenhang ist es aber auch denkbar, dass die Axialstege 24 eines Federelements 10 mittels nur eines Verbindungsrings 30 miteinander verbunden sind. Hierbei können beispielsweise nur auf gleicher axialer Höhe befindliche Endabschnitte 26 mittels eines Verbindungsrings 30 miteinander verbunden sein, wohingegen die gegenüberliegenden anderen Endabschnitte 26 nicht miteinander verbunden sind. Überdies kann der Verbindungsring 30 in axialer Richtung gesehen zwischen den Endabschnitten 26 ausgebildet sein, um die Zwischenabschnitte 28 der Axialstege 24 miteinander zu verbinden, so dass sämtliche Endabschnitte 26 frei sind.

Die Verbindungsringe 30a, 30b weisen jeweils einen Schlitz 32 auf, damit das Federelement 10 in Umfangsrichtung federelastisch ausgebildet ist. Die Schlitze 32 der Verbindungsringe 30a, 30b erstrecken sich in einer gemeinsamen axialen Erstreckungsrichtung (Fig. 1).

Damit das Federelement 10 in dem Durchgang 22 des Ausgleichselements 20 sicher gehalten ist, weist das Federelement 10 mehrere Verkrallungsabschnitte 34 auf, welche sich in Bezug auf die Längsmittelachse L des Federelements 10 schräg nach außen erstrecken und welche zu ihren jeweiligen freien Enden hin spitz zulaufen. Wie anhand der Figuren ersichtlich ist, stehen die freien Enden der Verkrallungsabschnitte 34 in radialer Richtung weiter nach außen hervor als die Endabschnitte 26 des Federelements 10, um so ein besonders sicheres Verkrallen des Federelements 10 in dem Durchgang 22 des Ausgleichselements 20 zu ermöglichen.

Die Verkrallungsabschnitte 34 gehen jeweils zu den Endabschnitten 26 in axialer Richtung beabstandet aus den Verbindungsringen 30a, 30b hervor. Des Weiteren sind die Verkrallungsabschnitte 34 in Umfangsrichtung des Federelements 10 gesehen zwischen den Axialstegen 24 ausgebildet. Zusätzlich oder alternativ könnte mindestens ein Verkrallungsabschnitt 34 auch aus zumindest einem der Axialstege 24 hervorgehen. Jedenfalls weisen die freien Enden der Verkrallungsabschnitte 34 in dem dargestellten Ausführungsbeispiel mit ihren freien Enden in Richtung einer senkrecht zur Längsmittelachse L des Federelements 10 ausgerichteten Mittenebene E des Federelements 10 (Fig. 2).

Wie besonders anhand von Fig. 1 zu erkennen ist, sind die Verkrallungsabschnitte 34 in axialer Richtung beabstandet und paarweise einander gegenüberstehend zueinander ausgerichtet. Insbesondere sind die Verkrallungsabschnitte 34 einer durch die Mittenebene E definierten ersten Hälfte des Federelements 10 entgegengesetzt zu den Verkrallungsabschnitten 34 einer zweiten Hälfte des Federelements 10 ausgerichtet, so dass die freien Enden der Verkrallungsabschnitte 34 der ersten Hälfte und die freien Enden der Verkrallungsabschnitte 34 der zweiten Hälfte einander zugewandt sind. Wie überdies anhand der Figuren zu erkennen ist, weist das Federelement in Bezug auf die Mittenebene E einen spiegelsymmetrischen Aufbau auf, wodurch sich das Federelement 10 mit seinem einen axialen Ende oder aber auch mit seinem anderen axialen Ende auf einfache Weise in den Durchgang 22 des Ausgleichselements 20 einführen lässt.

Das Einführen des Federelements 10 in den Durchgang 22 des Ausgleichselements 20 erfolgt in Richtung einer Montagerichtung M (siehe Pfeil M in Fig. 2). Durch die axiale Beabstandung der Verkrallungsabschnitte 34 in Bezug auf die Endabschnitte 26 der Axialstege 24 sind die Endabschnitte 26 in Montagerichtung M zu den Verkrallungsabschnitten 34 in axialer Richtung vorgelagert, wodurch sich das Federelement 10 zunächst ohne Verkrallung mit geringerem Kraftaufwand in den Durchgang 22 des Ausgleichselements 20 einführen lässt.

Nachdem das Federelement 10 in den Durchgang 22 des Ausgleichselements 20 eingeführt wurde, sperren die entgegengesetzt zur Montagerichtung M ausgerichteten Verkrallungsabschnitte 34 gegen eine Verschiebung des Federelements 10 in Richtung entgegengesetzt zur Montagerichtung M, so dass das Federelement 10 in dem Durchgang 22 des Ausgleichselements 20 sicher gehalten ist.

### Bezugszeichenliste

- 10: Federelement
- 12: Vorrichtung
- 14: erstes Bauteil
- 16: zweites Bauteil
- 18: Grundelement
- 20: Ausgleichselement
- 22: Durchgang
- 24: Axialsteg
- 26: Endabschnitt
- 26a: Endabschnitt
- 26b: gegenüberliegender Endabschnitt zu 26a
- 28: Zwischenabschnitt
- 30: Verbindungsring
- 30a: erster Verbindungsring
- 30b: zweiter Verbindungsring
- 32: Schlitz
- 34: Verkrallungsabschnitt

- L: Längsmittelachse
- E: Mittenebene
- M: Montagerichtung

## Patentansprüche

1. Federelement (10) für eine Vorrichtung (12) zum Ausgleichen von Toleranzen zwischen einem ersten Bauteil (14) und einem zweiten Bauteil (16), wobei das Federelement (10) umfasst:
mindestens zwei sich in Richtung einer Längsmittelachse (L) des Federelements (10) erstreckende und in Umfangsrichtung des Federelements (10) zueinander beabstandete Axialstege (24), welche jeweils in Richtung der Längsmittelachse (L) des Federelements (10) gesehen zwei gegenüberliegende und durch einen Zwischenabschnitt (28) verbundene Endabschnitte (26) aufweisen, wobei die Endabschnitte (26) eines Axialstegs (24) zumindest annähernd den gleichen Radialabstand zur Längsmittelachse (L) aufweisen und der zwischen diesen Endabschnitten (26) angeordnete Zwischenabschnitt (28) einen davon verschiedenen Radialabstand zur Längsmittelachse (L) aufweist; und
mindestens einen Verbindungsring (30), welcher die Axialstege (24) miteinander verbindet,
**gekennzeichnet durch**,
mindestens einen nicht an axialen Endseiten des Federelements (10) ausgebildeten, sondern zu den Endabschnitten (26) der Axialstege (24) in axialer Richtung beabstandeten Verkrallungsabschnitt (34), welcher sich in Bezug auf die Längsmittelachse (L) schräg nach außen erstreckt.

2. Federelement (10) nach Anspruch 1,
**dadurch gekennzeichnet,**
**dass** der Verkrallungsabschnitt (34) in radialer Richtung über die Endabschnitte (26) hinausragt.

3. Federelement (10) nach Anspruch 1 oder 2,
**dadurch gekennzeichnet,**
**dass** die Radialabstände der Endabschnitte (26) eines Axialstegs (24) größer sind als ein maximaler Radialabstand des zwischen diesen Endabschnitten (26) angeordneten Zwischenabschnitts (28).

4. Federelement (10) nach zumindest einem der vorstehenden Ansprüche,
**dadurch gekennzeichnet,**
**dass** mindestens ein Verkrallungsabschnitt (34) aus dem Verbindungsring (30) und/oder aus einem der Axialstege (24) hervorgeht.

5. Federelement (10) nach zumindest einem der vorstehenden Ansprüche,
**dadurch gekennzeichnet,**
**dass** der oder jeder Verkrallungsabschnitt (34) in Richtung seines freien Endes spitz zuläuft.

6. Federelement (10) nach zumindest einem der vorstehenden Ansprüche,
**dadurch gekennzeichnet,**
**dass** ein freies Ende des oder jedes Verkrallungsabschnitts (34) in Richtung einer senkrecht zur Längsmittelachse (L) ausgerichteten Mittenebene (E) des Federelements (10) weist.

7. Federelement (10) nach zumindest einem der vorstehenden Ansprüche,
**dadurch gekennzeichnet,**
**dass** der Verbindungsring (30) die Axialstege (24) im Bereich ihrer einen Endabschnitte (26) miteinander verbindet, während die gegenüberliegenden anderen Endabschnitte (26) nicht durch einen Verbindungsring (30) verbunden sind.

8. Federelement (10) nach zumindest einem der Ansprüche 1 bis 6,
**dadurch gekennzeichnet,**
**dass** der Verbindungsring (30) die Axialstege (24) im Bereich ihrer Zwischenabschnitte (28) miteinander verbindet.

9. Federelement (10) nach zumindest einem der Ansprüche 1 bis 6,
**dadurch gekennzeichnet,**
**dass** ein erster Verbindungsring (30a) die Axialstege (24) im Bereich ihrer einen Endabschnitte (26a) und ein zweiter Verbindungsring (30b) die Axialstege (24) im Bereich ihrer gegenüberliegenden anderen Endabschnitte (26b) miteinander verbindet.

10. Federelement (10) nach Anspruch 8 oder 9,
**dadurch gekennzeichnet,**
**dass** eine senkrecht zur Längsmittelachse (L) ausgerichtete Mittenebene (E) des Federelements (10) eine erste Hälfte und eine zweite Hälfte des Federelements (10) definiert, wobei mindestens ein Verkrallungsabschnitt (34) der ersten Hälfte des Federelements (10) mindestens einem Verkrallungsabschnitt (34) der zweiten Hälfte des Federelements (10) zugewandt ist.

11. Federelement (10) nach Anspruch 10,
**dadurch gekennzeichnet,**
**dass** das Federelement (10) in Bezug auf die Mittenebene (E) spiegelsymmetrisch ausgebildet ist.

12. Federelement (10) nach zumindest einem der vorstehenden Ansprüche,
**dadurch gekennzeichnet,**
**dass** der oder jeder Verbindungsring (30) einen Schlitz (32) aufweist, insbesondere wobei die Schlitze aller Verbindungsringe (30) axial ausgerichtet sind.

13. Vorrichtung (12) zum Ausgleichen von Toleranzen zwischen einem ersten Bauteil (14) und einem zweiten Bauteil (16) mit einem Grundelement (18), einem mit dem Grundelement (18) in Eingriff stehenden Ausgleichselement (20), in welchem ein Durchgang (22) für ein Verbindungsmittel ausgebildet ist, und einem Federelement (10) nach einem der Ansprüche 1 bis 12, welches in dem Durchgang (22) des Ausgleichselements (20) angeordnet ist.

14. Vorrichtung (12) nach Anspruch 13,
**dadurch gekennzeichnet,**
**dass** das Federelement (10) zur Anordnung in dem Durchgang (22) in einer Montagerichtung (M) in den Durchgang einbringbar ist und die Endabschnitte (26) in Montagerichtung (M) dem oder jedem Verkrallungsabschnitt (34) vorgelagert sind.

15. Vorrichtung (12) nach Anspruch 14,
**dadurch gekennzeichnet,**
**dass** das Federelement (10) zur Anordnung in dem Durchgang (22) in einer Montagerichtung (M) in den Durchgang (22) einbringbar ist und mindestens ein Verkrallungsabschnitt (34) gegen eine Verschiebung des Federelements (10) in einer zur Montagerichtung (M) entgegengesetzten Richtung sperrt.

## Claims

1. A spring element (10) for a device (12) for compensating for tolerances between a first component (14) and a second component (16), wherein the spring element (10) comprises:
at least two axial webs (24) extending in the direction of a longitudinal center axis (L) of the spring element (10) and spaced apart from one another in the circumferential direction of the spring element (10), each of which, viewed in the direction of the longitudinal center axis (L) of the spring element (10), has two opposite end sections (26) connected by an intermediate section (28), wherein the end sections (26) of an axial web (24) have at least approximately the same radial distance from the longitudinal center axis (L) and the intermediate section (28) arranged between these end sections (26) has a different radial distance from the longitudinal center axis (L); and
at least one connecting ring (30) which connects the axial webs (24) to one another,
**characterized by**
at least one claw section (34) which is not formed at axial end sides of the spring element (10), but is spaced apart in the axial direction from the end sections (26) of the axial webs (24) and extends obliquely outward with respect to the longitudinal center axis (L).

2. A spring element (10) according to claim 1,
**characterized in that**
the claw section (34) projects beyond the end sections (26) in the radial direction.

3. A spring element (10) according to claim 1 or 2,
**characterized in that**
the radial distances between the end sections (26) of an axial web (24) are greater than a maximum radial distance of the intermediate section (28) arranged between these end sections (26).

4. A spring element (10) according to at least one of the preceding claims,
**characterized in that**
at least one claw section (34) emerges from the connecting ring (30) and/or from one of the axial webs (24).

5. A spring element (10) according to at least one of the preceding claims,
**characterized in that**
the or each claw section (34) tapers in the direction of its free end.

6. A spring element (10) according to at least one of the preceding claims,
**characterized in that**
a free end of the or each claw section (34) points in the direction of a center plane (E) of the spring element (10) which is oriented perpendicular to the longitudinal center axis (L).

7. A spring element (10) according to at least one of the preceding claims,
**characterized in that**
the connecting ring (30) connects the axial webs (24) to one another in the region of one of their end sections (26), while the other opposite end sections (26) are not connected by a connecting ring (30).

8. A spring element (10) according to at least one of the claims 1 to 6,
**characterized in that**
the connecting ring (30) connects the axial webs (24) to one another in the region of their intermediate sections (28).

9. A spring element (10) according to at least one of the claims 1 to 6,
**characterized in that**
a first connecting ring (30a) connects the axial webs (24) in the region of one of their end sections (26a) and a second connecting ring (30b) connects the axial webs (24) in the region of their other opposite end sections (26b).

10. A spring element (10) according to claim 8 or 9,
**characterized in that**
a center plane (E) of the spring element (10) oriented perpendicular to the longitudinal center axis (L) defines a first half and a second half of the spring element (10), with at least one claw section (34) of the first half of the spring element (10) facing at least one claw section (34) of the second half of the spring element (10).

11. A spring element (10) according to claim 10,
**characterized in that**
the spring element (10) is designed to be mirror-symmetrical with respect to the center plane (E).

12. A spring element (10) according to at least one of the preceding claims,
**characterized in that**
the or each connecting ring (30) has a slot (32), in particular with the slots of all connecting rings (30) being axially aligned.

13. A device (12) for compensating for tolerances between a first component (14) and a second component (16) with a base element (18), a compensation element (20) which engages with the base element (18) and in which a passage (22) for a connecting means is formed, and a spring element (10) according to any of the claims 1 to 12 which is arranged in the passage (22) of the compensation element (20).

14. A device (12) according to claim 13,
**characterized in that**,
for arrangement in the passage (22), the spring element (10) can be inserted into the passage in an installation direction (M) and the end sections (26) are upstream of the or each claw section (34) in the installation direction (M).

15. A device (12) according to claim 14,
**characterized in that**,
for arrangement in the passage (22), the spring element (10) can be inserted into the passage (22) in an installation direction (M) and at least one claw section (34) locks against displacement of the spring element (10) in a direction opposite to the installation direction (M).

## Revendications

1. Elément élastique (10) pour un dispositif (12) de compensation de tolérances entre un premier composant (14) et un deuxième composant (16), l'élément élastique (10) comprenant :
au moins deux ailes axiales (24) s'étendant dans la direction d'un axe médian longitudinal (L) de l'élément élastique (10) et espacées l'une de l'autre dans la direction périphérique de l'élément élastique (10), qui présentent chacune, vues dans la direction de l'axe médian longitudinal (L) de l'élément élastique (10), deux portions d'extrémité (26) opposées et reliées par une portion intermédiaire (28), les portions d'extrémité (26) d'une aile axiale (24) présentant au moins approximativement la même distance radiale par rapport à l'axe médian longitudinal (L), et la portion intermédiaire (28) disposée entre ces portions d'extrémité (26) présentant une distance radiale par rapport à l'axe médian longitudinal (L) qui est différente de ladite distance radiale ; et
au moins une bague de liaison (30) qui relie les ailes axiales (24) entre elles,
**caractérisé par**
au moins une portion d'accrochage (34) qui n'est pas réalisée aux faces d'extrémité axiales de l'élément élastique (10), mais qui est espacée axialement des portions d'extrémité (26) des ailes axiales (24) et qui s'étend vers l'extérieur en oblique par rapport à l'axe médian longitudinal (L).

2. Elément élastique (10) selon la revendication 1,
**caractérisé en ce que**
la portion d'accrochage (34) dépasse en direction radiale au-delà des portions d'extrémité (26).

3. Elément élastique (10) selon la revendication 1 ou 2,
**caractérisé en ce que**
les distances radiales des portions d'extrémité (26) d'une aile axiale (24) sont supérieures à une distance radiale maximale de la portion intermédiaire (28) disposée entre ces portions d'extrémité (26).

4. Elément élastique (10) selon l'une au moins des revendications précédentes,
**caractérisé en ce que**
au moins une portion d'accrochage (34) est formée à partir de la bague de liaison (30) et/ou de l'une des ailes axiales (24).

5. Elément élastique (10) selon l'une au moins des revendications précédentes,
**caractérisé en ce que**
la ou chaque portion d'accrochage (34) se termine en pointe en direction de son extrémité libre.

6. Elément élastique (10) selon l'une au moins des revendications précédentes,
**caractérisé en ce que**
une extrémité libre de la ou de chaque portion d'accrochage (34) est dirigée en direction d'un plan médian (E) de l'élément élastique (10) orienté perpendiculairement à l'axe médian longitudinal (L).

7. Elément élastique (10) selon l'une au moins des revendications précédentes,
**caractérisé en ce que**
la bague de liaison (30) relie les ailes axiales (24) entre elles au niveau des unes de leurs portions d'extrémité (26), tandis que les autres portions d'extrémité (26) opposées ne sont pas reliées par une bague de liaison (30).

8. Elément élastique (10) selon l'une au moins des revendications 1 à 6,
**caractérisé en ce que**
la bague de liaison (30) relie les ailes axiales (24) entre elles au niveau de leurs portions intermédiaires (28).

9. Elément élastique (10) selon l'une au moins des revendications 1 à 6,
**caractérisé en ce que**
une première bague de liaison (30a) relie les ailes axiales (24) au niveau des unes de leurs portions d'extrémité (26a), et une deuxième bague de liaison (30b) relie les ailes axiales (24) au niveau de leurs autres portions d'extrémité (26b) opposées.

10. Elément élastique (10) selon la revendication 8 ou 9,
**caractérisé en ce que**
un plan médian (E) de l'élément élastique (10), orienté perpendiculairement à l'axe médian longitudinal (L), définit une première moitié et une deuxième moitié de l'élément élastique (10), au moins une portion d'accrochage (34) de la première moitié de l'élément élastique (10) étant tournée vers au moins une portion d'accrochage (34) de la deuxième moitié de l'élément élastique (10).

11. Elément élastique (10) selon la revendication 10,
**caractérisé en ce que**
l'élément élastique (10) est réalisé à symétrie axiale par rapport au plan médian (E).

12. Elément élastique (10) selon l'une au moins des revendications précédentes,
**caractérisé en ce que**
la ou chaque bague de liaison (30) présente une fente (32), en particulier les fentes de toutes les bagues de liaison (30) étant orientées axialement.

13. Dispositif (12) de compensation de tolérances entre un premier composant (14) et un deuxième composant (16), comprenant un élément de base (18), un élément de compensation (20) qui est en prise avec l'élément de base (18) et dans lequel est formé un passage (22) pour un moyen de liaison, et un élément élastique (10) selon l'une des revendications 1 à 12, qui est disposé dans le passage (22) de l'élément de compensation (20).

14. Dispositif (12) selon la revendication 13,
**caractérisé en ce que**
pour agencer l'élément élastique (10) dans le passage (22), il est apte à être inséré dans le passage selon une direction de montage (M), et les portions d'extrémité (26) sont situées en amont de la ou de chaque portion d'accrochage (34) selon la direction de montage (M).

15. Dispositif (12) selon la revendication 14,
**caractérisé en ce que**
pour agencer l'élément élastique (10) dans le passage (22), il est apte à être inséré dans le passage (22) selon une direction de montage (M), et au moins une portion d'accrochage (34) se bloque à l'encontre d'un déplacement de l'élément élastique (10) selon une direction opposée à la direction de montage (M).
